# EUROPEAN PATENT APPLICATION

(11) **EP 4 691 650 A1**
(43) Date of publication of application: **11.02.2026**
(21) Application number: 24880155.7
(22) Date of filing: 17.10.2024
(51) Int. Cl.: B05C 5/02, B05C 11/10, H01M 4/04

(54) **COATING APPARATUS**

(30) Priority: 17.10.2023 KR 20230138974
(71) Applicant: LG Energy Solution, Ltd., Seoul 07335 (KR)
(72) Inventor: KIM, Jin-Tae, Daejeon 34122 (KR); KIM, Min-Ju, Daejeon 34122 (KR); KIM, Si-Hwan, Daejeon 34122 (KR); PARK, Seung-Seo, Daejeon 34122 (KR); AHN, Byoung-Hoon, Daejeon 34122 (KR); YANG, Hyung-Jun, Daejeon 34122 (KR); LEE, Jung-Won, Daejeon 34122 (KR); JANG, Ji-Woong, Daejeon 34122 (KR); HWANG, Yu-Jin, Daejeon 34122 (KR)
(74) Representative: Goddar, Heinz J.
(86) International application number: PCT/KR2024/015813
(87) International publication number: WO 2025/084818

(57) **Abstract**

The present disclosure relates to a coating apparatus that may include a first block having an opening with a predetermined horizontal length and a predetermined vertical length and an accommodation portion configured to receive a coating liquid, a second block spaced a predetermined distance apart from the first block and disposed opposite to the opening of the accommodation portion, a slot defined as a space between the first block and the second block, and configured to receive the coating liquid from the accommodation portion and discharge the same to the outside, and a plate shim disposed in the slot and configured to close a portion of the opening of the accommodation portion, thereby changing a flow of the coating liquid transferred from the accommodation portion to the slot, and the plate shim may include a width limit portion configured to close a portion of the opening of the accommodation portion in a horizontal direction from at least one of horizontal both ends thereof, and a height limit portion configured to close a portion of the opening of the accommodation portion in a vertical direction.

## Description

### TECHNICAL FIELD

The present disclosure relates to a coating apparatus and, more particularly, to a coating apparatus including a plate shim. This application is based on and claims priority from Korean Patent Application No. 10-2023-0138974, filed on October 17, 2023, with the Korean Intellectual Property Office, the disclosure of which is incorporated herein in its entirety by reference.

### BACKGROUND ART

As the demand for mobile devices increase along with technological development, the demand for secondary batteries as an energy source is rapidly increasing, and these secondary batteries essentially include electrode assemblies, which are power generation elements. The electrode assembly is configured by laminating a positive electrode, a separator, and a negative electrode at least once, and the positive electrode and negative electrode are manufactured by applying and drying positive electrode active material slurry and negative electrode active material slurry on current collectors made of aluminum foil and copper foil, respectively. These secondary batteries generally use, as positive electrode active materials, lithium cobalt oxides (LiCoO2) in a layered crystal structure, lithium manganese oxides such as LiMnO2 in a layered crystal structure or LiMn2O4 in a spinel crystal structure, and lithium nickel oxides (LiNiO2). In addition, carbon-based materials are usually used as negative electrode active materials and, these days, considered to be used mixed with silicon-based materials or silicon oxide-based materials, which have an effective capacity 10 times higher than that of carbon-based materials, in response to an increase in demand for high-energy lithium secondary batteries. In order to attain the uniform charge/discharge characteristics of the secondary battery, the positive electrode active material slurry and the negative electrode active material slurry must be evenly coated on the current collector.

In order to increase the precision of the coating apparatus, a coating liquid must be applied thinly and evenly onto a coating body (substrate).

However, an existing coating apparatus is unable to control the discharge amount of the coating liquid, or even when it is controlled, the coating liquid coated on the substrate is not uniform throughout the width direction of the discharge port.

Therefore, a coating apparatus capable of improving the uniformity of coating, compared to the conventional coating apparatus, is required.

### DISCLOSURE

### Technical Problem

The present disclosure is designed to solve the problems of the related art, and therefore the present disclosure is directed to providing a coating apparatus including a plate shim configured to improve the uniformity of coating on the coating body.

The present disclosure is also to provide a coating apparatus including a plate shim configured to maximize the area in which the coating thickness of the coating body reaches a target thickness.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a coating apparatus that may include a first block having an opening with a predetermined horizontal length and a predetermined vertical length and an accommodation portion configured to receive a coating liquid, a second block spaced a predetermined distance apart from the first block and disposed opposite to the opening of the accommodation portion, a slot defined as a space between the first block and the second block, and configured to receive the coating liquid from the accommodation portion and discharge the same to the outside, and a plate shim disposed in the slot and configured to close a portion of the opening of the accommodation portion, thereby changing a flow of the coating liquid transferred from the accommodation portion to the slot, wherein the plate shim may include a width limit portion configured to close a portion of the opening of the accommodation portion in a horizontal direction from at least one of horizontal both ends thereof, and a height limit portion configured to close a portion of the opening of the accommodation portion in a vertical direction.

In addition, the plate shim may be configured to be replaceable.

In addition, the width limit portion may be provided at each of horizontal both ends of the accommodation portion, and the height limit portion may be provided between the two width limit portions.

In addition, the height limit portion may include a straight portion whose edge shape changes linearly along the horizontal direction and a curved portion whose edge shape changes in a curve having a predetermined radius of curvature along the horizontal direction.

In addition, a vertical length of the straight portion may become a maximum at a boundary between the straight portion and the curved portion, and gradually decrease as it is further away from the curved portion in the horizontal direction.

In addition, the straight portion may be provided at each of horizontal both ends of the height limit portion.

In addition, the curved portion may be provided between the two straight portions.

In addition, the height limit portion may have a shape that is approximately symmetrical with respect to a horizontal center line of the curved portion in the horizontal direction.

In addition, an edge of the width limit portion may be configured to be approximately parallel to the vertical direction, and a slope of the straight portion may have an angle of approximately 60 degrees to 85 degrees with respect to the edge of the width limit portion.

In addition, a vertical length of the curved portion may become a maximum at a horizontal center of the curved portion and a minimum at boundaries with the two straight portions.

In addition, the vertical length of the curved portion may gradually decrease from the horizontal center of the curved portion toward the two straight portions.

In addition, a vertical length of the opening of the accommodation portion at the horizontal center of the curved portion may be approximately 50% to 55% of a vertical length thereof at the boundary between the curved portion and the straight portion.

In addition, a horizontal length of the curved portion may be approximately 4.5 times to 5.5 times a horizontal length of each of the straight portions.

In addition, a width of the slot and a thickness of the plate shim may be approximately identical.

In addition, the coating apparatus according to the present disclosure may further include a roller configured to transport a coating body by rotation of a roller body and disposed at a predetermined distance from the slot, and the slot may be configured to discharge the coating liquid onto the coating body as the roller body rotates, thereby coating the coating body.

In addition, the coating body may be an electrode to be used in a battery, and the coating liquid may be electrode slurry for coating the electrode.

### Advantageous Effects

According to an embodiment of the present disclosure, it is possible to improve the uniformity of coating on the coating body.

According to another aspect of the present disclosure, it is possible to maximize the area in which the coating thickness of the coating body reaches a target thickness, compared to the prior art.

### DESCRIPTION OF DRAWINGS

FIG. 1 is a conceptual diagram illustrating a coating apparatus according to an embodiment of the present disclosure.
FIG. 2 is an exploded perspective view illustrating a coating unit of a coating apparatus according to an embodiment of the present disclosure.
FIG. 3 is a conceptual diagram illustrating a plate shim of a coating apparatus according to an embodiment of the present disclosure.
FIG. 4 is a conceptual diagram illustrating a plate shim of a conventional coating apparatus.
FIG. 5 is a cross-sectional view illustrating coating of a coating body according to a conventional coating apparatus.
FIG. 6 is a cross-sectional view of a coating body coated by a coating apparatus according to embodiments of the present disclosure.
FIG. 7 is a diagram illustrating experimental coating results obtained from a coating apparatus according to embodiments of the present disclosure.
FIG. 8 is a diagram illustrating experimental coating results obtained from a coating apparatus according to embodiments of the present disclosure.
FIG. 9 is a graph illustrating comparison of coating cross-sections between a conventional coating apparatus and an improved coating apparatus of the present disclosure.

### BEST MODE

Hereinafter, preferred embodiments of the present disclosure will be described in detail with reference to the accompanying drawings. The accompanying drawings illustrate a preferred embodiment of the present disclosure and, together with the detailed description of the invention, serve to provide further understanding of the technical idea of the present disclosure, and thus, the present disclosure is not construed as being limited to the drawings. The same reference numerals indicate the same elements. In addition, thicknesses, ratios, and sizes of respective elements shown in the attached drawings may be exaggerated for clarification of the present disclosure.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Meanwhile, although terms indicating directions such as up, down, left, right, front, and back directions are used in this specification, it is obvious to those skilled in the art that these terms are only for convenience of explanation and may vary depending on the position of the target object or the position of the observer.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

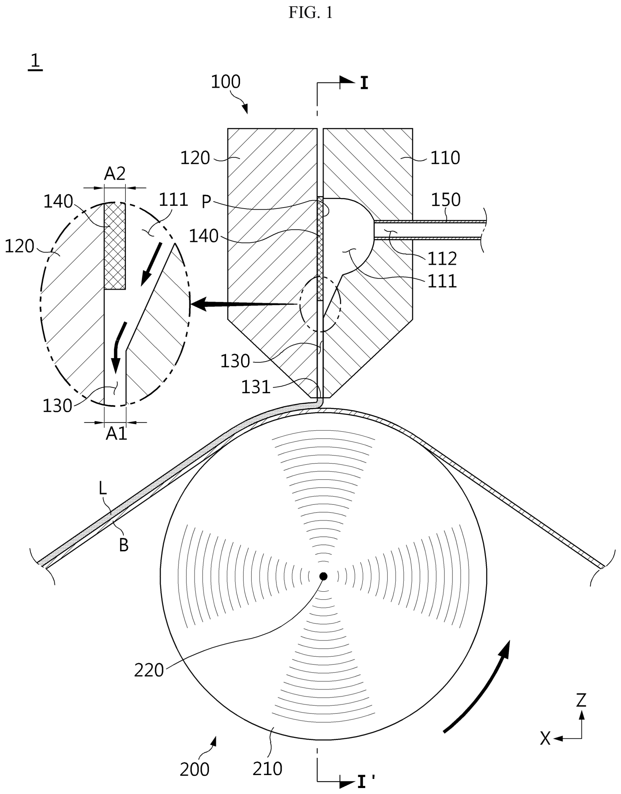

Hereinafter, a coating apparatus including a plate shim according to an embodiment of the present disclosure will be described with reference to FIGS. 1 to 8.

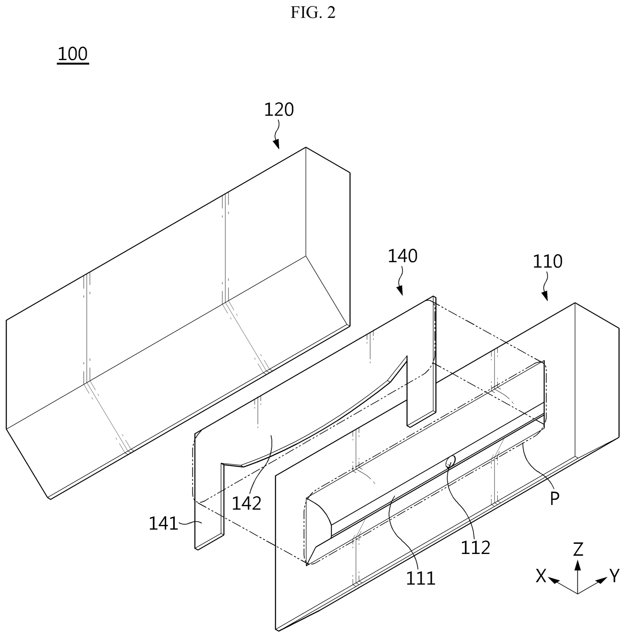

FIG. 1 is a conceptual diagram illustrating a coating apparatus according to an embodiment of the present disclosure. FIG. 2 is an exploded perspective view illustrating a coating unit of a coating apparatus according to an embodiment of the present disclosure.

The coating apparatus 1 may include a coating unit 100 and a roller 200. The coating apparatus 1 may also be referred to as another name such as a slot die coater or the like.

The coating apparatus 1 may apply a coating liquid L to a coating body B. For example, the coating body B may be an electrode to be used in a secondary battery, and the coating liquid L may be slurry to be applied onto the electrode.

The slurry may be one of either a positive electrode active material or a negative electrode active material. The electrodes may be configured such that a positive electrode, a separator, and a negative electrode are laminated at least once. The positive electrode and the negative electrode may be manufactured by applying and drying a positive electrode active material or a negative electrode active material to current collectors made of aluminum foil and copper foil, respectively.

The coating apparatus 1 may be used to apply a positive electrode active material and/or a negative electrode active material to an electrode to be used in a secondary battery.

The coating unit 100 may include a first block 110, a second block 120, a slot 130, a plate shim 140, and an injection hose 150. The coating unit 100 including the above elements may apply a coating liquid L to a coating body B transported by the roller 200.

The first block 110 may have an accommodation portion 111 that is open in one direction through an opening P having a predetermined horizontal length H and a predetermined vertical length V. Referring to FIG. 1 and FIG. 2, the opening P of the accommodation portion 111 may face in the +X-axis direction. The accommodation portion 111 may receive a coating liquid L in its inner space.

The first block 110 may have an inlet 112 for injecting the coating liquid L into the accommodation portion 111. The inlet 112 is a passage that communicates with a part of the accommodation portion 111, and a hose 150 may be inserted thereinto. The hose 150 may be inserted into the inlet 112 to inject the coating liquid L into the inner space of the accommodation portion 111.

The second block 120 may be spaced a predetermined distance apart from the first block 110 and positioned opposite to the opening P of the accommodation portion 111. The space of a predetermined distance between the first block 110 and the second block 120 may be referred to as a slot 130. The coating liquid L accommodated in the accommodation portion 111 may be discharged to the outside through the slot 130.

The accommodation portion 111 may transfer the coating liquid L accommodated in the inner space to the slot 130. The opening P of the accommodation portion 111 may be an open region or an open space through which the accommodation portion 111 is open toward the slot 130. The opening P may indicate a virtual plane, perpendicular to the X-axis, that the coating liquid L stored in the accommodation portion 111 finally passes through before reaching the slot 130. Referring to FIG. 2, the opening P may have a roughly rectangular shape, and may have a predetermined horizontal length H and a predetermined vertical length V. The horizontal length H of the opening P may also be referred to as a width, and the vertical length V may also be referred to as a height.

The slot 130 may be defined as a space between the first block 110 and the second block 120, and may be configured to receive the coating liquid L from the accommodation portion 111 and discharge it to the outside.

The width A1 of the slot 130 is the same as the distance between the first block 110 and the second block 120, and in the case where the first block 110 and the second block 120 face each other in parallel, the width A1 of the slot 130 may be constant overall along the +Z-axis direction. The coating liquid L transferred from the accommodation portion 111 to the slot 130 may move in the -Z-axis direction by gravity, and may be discharged toward a coating body B from the lower end (end in the -Z-axis direction) of the slot 130. In this case, the lower end of the slot 130 from which the coating liquid L is discharged may be referred to as a discharge port 131. The discharge port 131 may be provided at the end of the slot 130 in the -Z-axis direction. The discharge port 131 may be a part of the slot 130 and may be the last area that the coating liquid L to be discharged from the coating unit 100 passes through. The coating unit 100 may discharge the coating liquid L onto the coating body B through the discharge port 131.

The plate shim 140 may be disposed in the slot 130 to close a portion of the opening P of the accommodation portion 111. The plate shim 140 may be disposed in the slot 130 so as to be fitted between the first block 110 and the second block 120. In order for the plate shim 140 to be stably fitted into the slot 130, the width A1 of the slot 130 and the thickness A2 of the plate shim 140 may be approximately the same (see the enlarged view in FIG. 1). The first block 110 and/or the second block 120 may further include a configuration (not shown) such as a convex and concave structure so that the plate shim 140 may be fixed.

The plate shim 140 may be configured to change the flow of the coating liquid L transferred from the accommodation portion 111 to the slot 130 by closing a portion of the opening P of the accommodation portion 111. The plate shim 140 closing a portion of the opening P indicates that a portion of the opening P is covered to restrict the coating liquid L from flowing to the slot 130 through the covered portion.

The coating liquid L may flow from the opening P of the accommodation portion 111 to the slot 130 through a portion not covered by the plate shim 140. The elements of the coating apparatus 1 may be arranged as shown in FIG. 1, and the direction of gravity may be approximately the same as the -Z-axis direction.

The interior of the accommodation portion 111 may be configured such that the coating liquid L is able to move to the slot 130 by gravity. For example, referring to the enlarged view in FIG. 1, an inclined surface may be formed on the lower side of the interior of the accommodation portion 111 (in the -Z-axis direction), and the inclined surface may induce the coating liquid L accommodated inside the accommodation portion 111 to flow to the slot 130 disposed on the lower left side by gravity.

The coating liquid L may flow to the lower left side, i.e., to the slot 130, by gravity through the area not closed by the plate shim 140 while being prevented from flowing through the area closed by the plate shim 140.

The plate shim 140 may close different portions of the opening P of the accommodation portion 111 depending on the shape.

For example, referring to FIG. 2, the plate shim 140 may include a width limit portion 141 configured to close a portion of the opening P of the accommodation portion 111 from at least one of the both ends thereof in the horizontal direction (Y-axis direction). The width limit portion 141 may limit the width of the opening P to limit the coating width of the coating liquid L discharged from the accommodation portion 111. The width of the coating liquid L discharged in the state where the width is limited by the width limit portion 141 may correspond to the coating width of the coating body B.

Further, referring to FIG. 2, the plate shim 140 according to an embodiment of the present disclosure may include a height limit portion 142 configured to close a portion of the opening P of the accommodation portion 111 in the vertical direction (Z-axis direction). The height limit portion 142 may limit the open area of the opening P, thereby changing the pressure applied to the coating liquid L discharged from the accommodation portion 111.

Referring to FIG. 2, the width limit portion 141 according to an embodiment of the present disclosure may be provided at each of the horizontal both ends of the accommodation portion 111. According to the above-implemented configuration, the height limit portion 142 may be disposed between two width limit portions 141 provided at the horizontal both ends of the accommodation portion 111, respectively. However, this is only an example, and the width limit portion 141 may be provided at one horizontal end of the accommodation portion 111.

The roller 200 may include a roller body 210 and a rotation shaft 220. The roller body 210 of the roller 200 may be disposed at a predetermined distance from the slot 130. Referring to FIG. 1, the roller body 210 may be disposed at a predetermined distance in the down direction (-Z-axis direction) from the slot 130. The roller 200 may continuously transport the coating body B in one direction (-X-axis direction in FIG. 1) by the rotation of the roller body 210, and the coating liquid L may be discharged onto the coating body B as the roller body 210 rotates , thereby coating the coating body B.

As described above, the coating body B may be an electrode to be used in a battery, and the coating liquid may be electrode slurry for coating the electrode. The battery may be a secondary battery. In the case where the slurry is applied onto the positive electrode, the slurry may include, as positive electrode active materials, at least one of lithium cobalt oxides (LiCoO2) in a layered crystal structure, lithium manganese oxides such as LiMnO2 in a layered crystal structure or LiMn2O4 in a spinel crystal structure, and lithium nickel oxides (LiNiO2). In the case where the slurry is applied onto the negative electrode, the slurry may include carbon-based materials as negative electrode active materials, and may also include a silicon-based material or a silicon oxide-based material having an effective capacity 10 times higher than that of the carbon-based material.

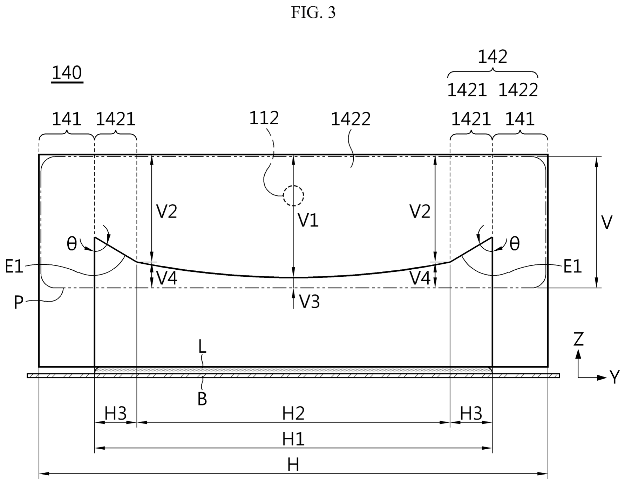

Hereinafter, the plate shim 140, the width limit portion 141, and the height limit portion 142 will be described in more detail with reference to FIG. 3.

FIG. 3 is a conceptual diagram illustrating a plate shim of a coating apparatus according to an embodiment of the present disclosure.

FIG. 3 shows the plate shim 140, the coating liquid L, and the coating body B taken and viewed along line I - I' in FIG. 1. For convenience of explanation, FIG. 3 focuses on the plate shim 140, the coating liquid L, and the coating body B while excluding other elements of the coating apparatus 1. Therefore, the excluded elements of the coating apparatus 1 may also be included in the implemented configuration of the present embodiment.

The accommodation portion 111 described with reference to FIGS. 1 and 2 is omitted from FIG. 3. However, the opening P, having the horizontal length H and vertical length V, of the accommodation portion 111 is illustrated with a dotted line. Accordingly, FIG. 3 shows the positional relationship and arrangement of the opening P and the plate shim 140. In addition, the inlet 112 is also shown in a dotted line inside the opening P.

The opening P of the accommodation portion may have a width as long as the horizontal length H and a height as long as the vertical length V. The opening P may be partially closed by the plate shim 140.

As described above, the plate shim 140 may change the pressure for the flow of the coating liquid L depending on the shapes or arrangement of the width limit portion 141 and the height limit portion 142, thereby changing the coating width or height of the coating liquid L on the coating body B.

Referring to FIGS. 2 and 3, the width limit portion 141 may be provided at each of the both ends of the accommodation portion 111 in the horizontal direction (Y-axis direction). Since the accommodation portion 111 is open through the opening P, the width limit portions 141 may be provided at the horizontal both ends of the opening P.

Although the width of the opening P of the accommodation portion 111 is H, the coating liquid L may be discharged onto the upper surface of the coating body B through the area between the two width limit portions 141 of the plate shim 140 while the width of the coating liquid L is limited by the two width limit portions 141 so as to be reduced to H1, which is narrower than H.

Referring to FIGS. 2 and 3, the height limit portion 142 may be disposed between two width limit portions 141 provided at the horizontal both ends of the accommodation portion 111. The height limit portion 142 may be disposed between the width limit portions 141 with the horizontal length H1 therebetween. The height of the height limit portion 142 may vary along the horizontal direction (Y-axis direction). Depending on the profile in which the vertical length of the height limit portion 142 varies along the horizontal direction of the plate shim 140, the pressure applied when the coating liquid L is discharged to the coating body B may vary.

The vertical length of the height limit portion 142 may limit the vertical length, i.e., the height, of the discharged coating liquid L. For example, V1 in FIG. 3 denotes the vertical length of the height limit portion 142 at the center thereof. V3 is obtained by subtracting V1 from the height V of the opening P.

Although the height of the opening P of the accommodation portion 111 is V, the coating liquid L may be discharged onto the upper surface of the coating body B through the lower area of the height limit portion 142 of the plate shim 140 while the height of the coating liquid L is limited by the height limit portion 142 having the height V1, which is less than V, at the center.

As described above, the height of the coating body B varies depending on the shape of the lower end of the height limit portion 142 (in the -Z-axis direction), and the lower end of the height limit portion 142 may be called an "edge". Therefore, the height of the coating body B may be determined depending on the shape of the edge of the height limit portion 142.

The shape of the edge of the height limit portion 142 may be configured to vary among the sections along the length direction (Y-axis direction). For example, referring to FIG. 3, the height limit portion 142 may include a straight portion 1421 in which the shape of the edge E1 changes linearly along the horizontal direction, and a curved portion 1422 in which the shape of the edge E2 changes in a curve having a predetermined radius of curvature along the horizontal direction.

The straight portion 1421 may be configured such that the height of the coating liquid L discharged onto the coating body B changes linearly along the horizontal length direction (Y-axis direction). The slope or angle of the straight portion 1421 may have a fixed value.

The curved portion 1422 may be configured such that the height of the coating liquid L discharged onto the coating body B changes gently along the horizontal length direction (Y-axis direction). The slope or angle of the curved portion 1422 may continuously change along the horizontal length direction.

The shape of the coating liquid L discharged onto the coating body B is determined according to the characteristics of the edge of the height limit portion 142, so the design of the shape, ratio, size, radius of curvature, or arrangement of the straight portion 1421 and the curved portion 1422 is very important. The embodiments of the present disclosure are intended to enable the coating liquid L to be very uniformly coated on the coating body B according to the shape, ratio, size, radius of curvature, or arrangement of the straight portion 1421 and the curved portion 1422.

The plate shim 140 may be configured to be replaceable. The plate shim 140 may be provided to be separated from the coating unit 100 for replacement. For example, one of the first block 110 or the second block 120 of the coating unit 100 may be separated from the other, so that the plate shim 140 may be separated. As another example, the coating apparatus 1 may be configured to enable the plate shim 140 to be separated from the coating unit 100 without separating other components of the coating unit 100.

When the plate shim 140 is replaced, the coating width and shape of the coating liquid L may be changed, so the shape or characteristics of the coating may be changed. Therefore, the user of the coating apparatus may obtain desired coating characteristics by replacing the plate shim 140 as needed when the material, size, or shape of the coating body B changes, when the characteristics of the coating liquid L change, or when a specific coating shape is desired.

The straight portion 1421 may have a constant slope θ. Referring to FIG. 3, the slope θ may indicate an angle between the edge of the width limit portion 141 and the straight portion 1421, which are adjacent to each other. The edge of the width limit portion 141 may be approximately parallel to the vertical direction (Z-axis direction), and in this case, the slope θ of the straight portion 1421 may indicate an angle between the vertical direction and the straight portion 1421.

According to an embodiment of the present disclosure, the slope θ of the straight portion 1421 and the slope of the curved portion 1422 may differ at the boundary therebetween. Specifically, the slope of the tangent line at the point of boundary between the curved portion 1422 and the straight portion 1421 may be different from the slope θ of the straight portion 1421. According to the above-implemented configuration, the amount of change in discharge pressure of the coating liquid L, which changes along the horizontal direction of the curved portion 1422, may change more significantly at the boundary between the straight portion 1421 and the curved portion 1422.

In addition, the vertical length V of the straight portion 1421 may become the maximum at the boundary between the straight portion 1421 and the curved portion 1422, and may gradually decrease as it is further away from the curved portion 1422 in the horizontal direction. According to the above-implemented configuration, the straight portion 1421 may make the opening P larger as it is further away from the curved portion 1422 in the horizontal direction.

Referring to FIG. 3, the straight portion 1421 may be disposed at each of both ends of the height limit portion 142 in the horizontal direction (Y-axis direction), and the curved portion 1422 may be disposed between two straight portions 1421. In addition, the height limit portion 142 may have a shape that is approximately symmetrical in the horizontal direction with respect to the horizontal center line of the curved portion 1422. Referring to FIG. 3, the height limit portion 142 may be approximately symmetrical in the left-right direction with respect to the line V1 indicating the center height. The height limit portion 142 having the above shape may improve the coating uniformity of the coating liquid L on the coating body B.

Meanwhile, the edge of the width limit portion 141 may be configured to be approximately parallel to the vertical direction. This configuration may enable the width limit portion 141 to limit the width of the opening P without limiting the height, thereby sharing a role with the height limit portion 142.

For example, the slope θ of the straight portion 1421 may have an angle of approximately 60 degrees to 85 degrees with respect to the edge of the width limit portion 141. According to an embodiment in which the edge of the width limit portion 141 is approximately parallel to the vertical direction, the slope θ of the straight portion 1421 may have an angle of approximately 60 degrees to 85 degrees with respect to the vertical direction (-Z-axis direction). The improvement of the coating shape according to the above range of slope θ will be described in more detail below with reference to other drawings.

The vertical length of the curved portion 1422 may become the maximum V1 at the horizontal center of the curved portion 1422 and the minimum V2 at the boundaries with the two straight portions 1421. More specifically, the vertical length of the curved portion 1422 may gradually decrease from the horizontal center V1 of the curved portion 1422 toward the two straight portions 1421.

Referring to FIG. 3, the vertical length of the curved portion 1422 gradually decreases from the horizontal center V1 toward the straight portions 1421 on both sides, and those of the straight portions 1421 also gradually decrease toward the width limit portions 141 on both sides, so that the height limit portion 1422 may be configured such that the vertical length gradually decreases from the horizontal center V1 toward the left and right sides.

According to the above-implemented configuration, the opening P of the accommodation portion 111 may have a vertical length (height) that varies along the horizontal direction (Y-axis direction). More specifically, the opening P may have a vertical length V3 at the horizontal center of the curved portion 1422, which is approximately 50% to 55% of the vertical length V4 at the boundary between the curved portion 1422 and the straight portion 1421. For example, the vertical length V3 at the horizontal center of the curved portion 1422 may be approximately 0.8 mm, and the vertical length V4 at the boundary between the curved portion 1422 and the straight portion 1421 may be approximately 1.6 mm.

According to the above-implemented configuration, the plate shim 140 may be configured to discharge the coating liquid L with the highest pressure at the center and to discharge the coating liquid L with a lower pressure on the left and right sides. Specifically, the height of the opening P at the horizontal center of the curved portion 1422 may be approximately half (50% to 55%) of the height of the opening P at the boundary between the curved portion 1422 and the straight portion 1421.

In addition, the horizontal length H2 of the curved portion 1422 may be approximately 4.5 times to 5.5 times the horizontal length H3 of each of the straight portions 1421.

For example, the horizontal length H2 of the curved portion 1422 may be approximately 100 mm, and the horizontal length H3 of the straight portion 1421 may be approximately 20 mm. According to the above-implemented configuration, if the straight portions 1421 are disposed on both sides of the curved portion 1422, the entire length H1 of the height limit portion 142 may be approximately 140 mm. The coating apparatus 1 including the plate shim 140 having the above configuration may discharge the coating liquid L with a width of approximately 140 mm.

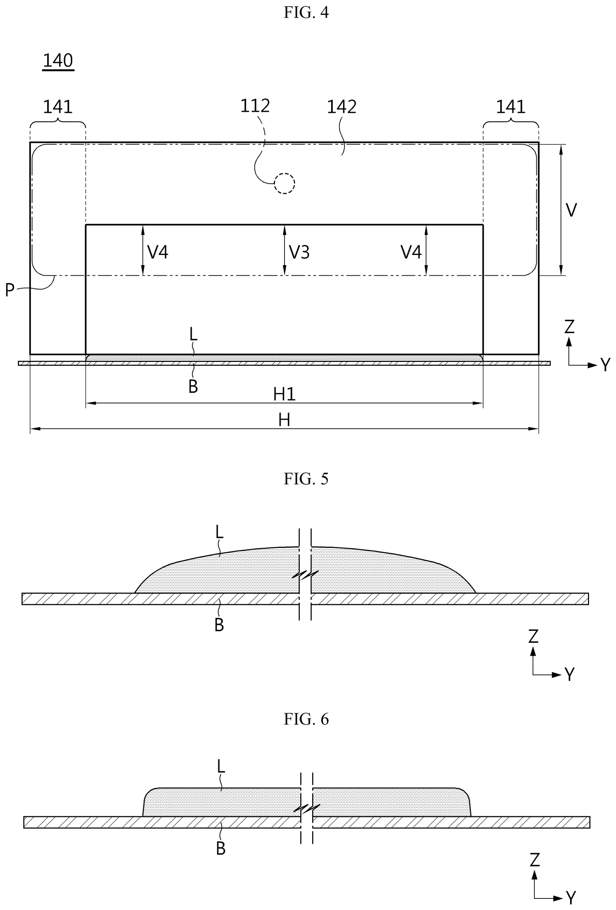

FIG. 4 is a conceptual diagram illustrating a plate shim of a conventional coating apparatus. FIG. 5 is a cross-sectional view illustrating coating of a coating body according to the conventional coating apparatus. Referring to FIGS. 4 and 5, the problems of the coating by the conventional coating apparatus will be explained as follows.

FIG. 4 illustrates a plate shim 140 used in the conventional coating apparatus. Referring to FIG. 4, in the plate shim 140 used in the conventional coating apparatus, the vertical length of the height limit portion 142 remains approximately the same along the horizontal direction. In the conventional height limit portion 142, the height V3 of the center and the height V4 on both sides remain constant along the horizontal direction, and as a result, the coating liquid L discharged through the opening P may be constant in the width direction (Y-axis direction).

FIG. 5 illustrates a cross-section of a coating body B coated with a coating liquid L according to the conventional coating apparatus. The coating liquid L is coated on the upper surface of the coating body B. According to the conventional coating apparatus, it can be seen that the central portion of the coating liquid L rises convexly so that the coating surface is unevenly coated along the Y-axis direction. This is due to the fact that the coating liquid L is concentrated in the center due to the surface tension of the coating liquid L. In addition, the end of the coating liquid L shows that the slope is too gentle so that the wide section fails to reach the height of the coating liquid L.

The coating apparatus 1 according to the embodiments of the present disclosure is able to solve the above problem by applying a higher discharge pressure to the coating liquid L discharged from the center of the opening P, thereby forming the coating surface more uniformly.

FIG. 6 is a cross-sectional view of a coating body coated by the coating apparatus according to the embodiments of the present disclosure described with reference to FIGS. 1 to 3. FIG. 6 illustrates a coating liquid L coated on a coating body B through the coating apparatus 1 including the plate shim 140 described with reference to FIGS. 1 to 3.

FIG. 6 illustrates the state in which the coating liquid L is coated on the coating body B with a uniform height (or thickness) overall using the plate shim 140 shown in FIG. 3. Referring to FIG. 6, it can be seen that the coating liquid L is coated on the coating body B with a uniform height overall as a result of coating the coating body B using the coating apparatus of the embodiments of the present disclosure.

The coating apparatus of the embodiments of the present disclosure may perform coating such that the central portion of the coating liquid L is flat and such that the coating surface is uniformly coated along the Y-axis direction. Furthermore, the end of the coating liquid L shows that the slope is steeper than the coating surface shown in FIG. 5 and that the maximum thickness of the coating layer is reached more quickly, so that the section that fails to reach the height of the coating liquid L is relatively small.

As described with reference to FIGS. 1 to 3, the plate shim 140 may close a portion of the opening P. Specifically, the height limit portion 141 is configured such that the height of the coating liquid L discharged through the discharge port is not constant in the width direction (Y-axis direction), thereby causing the discharge pressure of the coating liquid L to vary along the width direction.

In particular, if the height V3 of the opening P at the horizontal center is limited by the height limit portion 141 to be less than those of other areas, the pressure of the coating liquid L passing through the horizontal center of the opening P may relatively increase while passing through the plate shim 140. Since the coating liquid L flows from a place of high pressure to a place of low pressure, it may flow from the horizontal center of the opening P to both sides of the opening P, in which the pressure is low, in the horizontal direction, so that the coating liquid L concentrated in the center of the coating liquid L may flow to the sides. As a result, the coating apparatus 1 according to the embodiments of the present disclosure may obtain coating results with superior uniformity and flatness, compared to the conventional coating apparatus 1, as shown in FIG. 6.

Meanwhile, the coating body B may be an electrode to be used in a battery, and the coating liquid L may be electrode slurry to be coated on the electrode. If the electrode slurry is coated on the electrode using the coating apparatus 1 according to the embodiments of the present disclosure, the uniformity and flatness of the electrode slurry coated on the electrode may be improved, and the energy density of the battery including such an electrode may be improved.

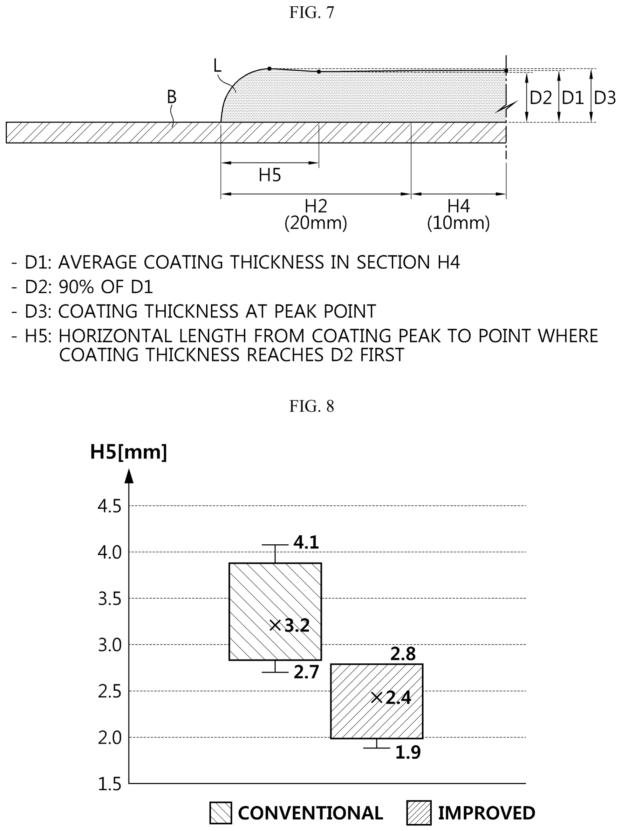

FIG. 7 and FIG. 8 are diagrams illustrating experimental coating results obtained from a coating apparatus according to embodiments of the present disclosure.

The numerical values or numerical ranges of the horizontal length H3 of the straight portion 1421 of the plate shim 130, the horizontal length H2 of the curved portion 1422, the ratio thereof, the slope θ of the straight portion 1421, the heights V3 and V4 of the opening P, and the ratio thereof according to the embodiments of the present disclosure are intended to perform coating with excellent uniformity and flatness as described above. According to the experimental results below, it can be seen that, according to the numerical ranges of the above-implemented configurations presented in the specification, coating results with significantly excellent uniformity and flatness is able to be obtained, compared to the conventional coating apparatus.

FIG. 7 illustrates a cross-section of a coating liquid L and a coating body B coated by the coating apparatus 1 according to the embodiments of the present disclosure described with reference to FIGS. 1 to 3.

In FIG. 7, H3 is a coating section obtained through the area H3 of the height limit portion 142 described with reference to FIG. 3, and H4 is a coating section disposed inward from the section H3 and having a half of the length of H3. For example, H3 may be a coating section having a length of approximately 20 mm from the edge, and H4, which is an inner area of H3, may be a coating section having a length of approximately 10 mm, which corresponds to a half of the length of H3.

D1 denotes an average coating thickness in the section H4, and D2 denotes a thickness corresponding to approximately 90% of D1. The coating section having a coating thickness of D1 to D2 may be regarded as the area where the coating body B is evenly coated, reaching the target thickness.

According to the coating apparatus according to the embodiments of the present disclosure, the cross-section of the coating layer may increase in thickness from the edge toward the inner side, reach a peak thickness, and then decrease slightly and increase again. D3 is the coating thickness at the peak point.

H5 represents the horizontal length from the coating peak to the point where the coating thickness reaches D2 first. The coating section inward from H5 (to the right of H5 in FIG. 7) is evenly coated to have a coating thickness of D1 to D2, so the shorter the length of H5, the flatter and more uniform the coating layer on the coated body B becomes.

FIG. 8 is a graph for comparing the results of the coating experiment between the conventional coating apparatus and the improved coating apparatus of the present disclosure. FIG. 8 shows the results of performing 10 coatings using the conventional coating apparatus and the results of performing 10 coatings using the improved coating apparatus of the present disclosure.

According to the graph shown in FIG. 8, the vertical axis represents a value of H5 described with reference to FIG. 7, and it shows the distribution of values of H5 according to the coating results using the conventional coating apparatus and the distribution of values of H5 according to the coating results using the coating apparatus according to the embodiment of the present disclosure.

According to the coating result of the conventional coating apparatus, the value H5 falls within the range of approximately 2.7 to 4.1 mm, and the median value is approximately 3.2 mm. On the other hand, according to the coating result of the coating apparatus according to the embodiment of the present disclosure, the value H5 falls within the range of approximately 1.9 to 2.8 mm, and the median value is approximately 2.4 mm.

According to the coating experiment results, the coating result of the coating apparatus according to the embodiment of the present disclosure shows a value of H5 lower than in the coating result of the conventional coating apparatus, so it can be evaluated that the coating apparatus according to the embodiment of the present disclosure may obtain flatter and more uniform coating layer than the conventional coating apparatus.

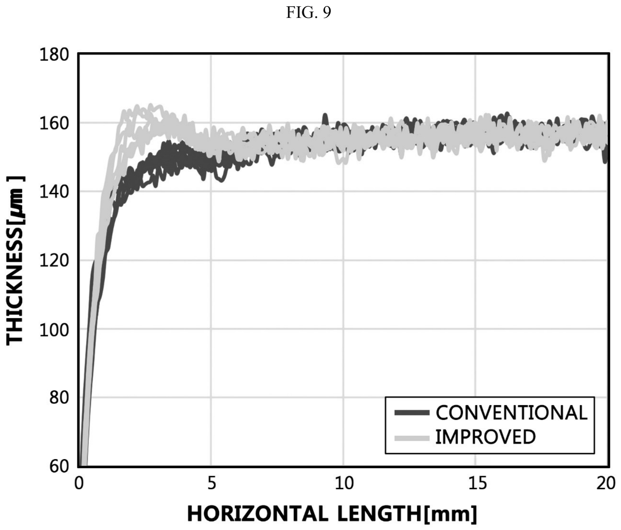

FIG. 9 is a graph illustrating comparison of cross-sections of coating layers between the conventional coating apparatus and the improved coating apparatus of the present disclosure.

The horizontal axis of the graph in FIG. 9 represents the horizontal length of a coating layer from the end to approximately 20 mm inward, and the vertical axis represents the thickness of the coating layer. The profile of the graph illustrated in FIG. 9 may be similar to the profile of the cross-section of the coating layer.

Referring to the graph illustrated in FIG. 9, the coating result of the conventional coating apparatus shows a relatively gentle slope until reaching a flat section, so that the flat area is relatively insufficient, compared to the improved result. On the other hand, the coating result of the improved coating apparatus according to the present disclosure shows a relatively steep slope until reaching a flat section, and a constant flat area, so that the flat area is wider than the conventional coating apparatus.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the scope of the present disclosure should be construed by the claims drafted to encompass all of the modifications.

## Claims

1. A coating apparatus comprising:
a first block having an opening with a predetermined horizontal length and a predetermined vertical length, and an accommodation portion configured to receive a coating liquid;
a second block spaced a predetermined distance apart from the first block and disposed opposite to the opening of the accommodation portion;
a slot defined as a space between the first block and the second block, and configured to receive the coating liquid from the accommodation portion and discharge the same to the outside; and
a plate shim disposed in the slot and configured to close a portion of the opening of the accommodation portion, thereby changing a flow of the coating liquid transferred from the accommodation portion to the slot,
wherein the plate shim comprises a width limit portion configured to close a portion of the opening of the accommodation portion in a horizontal direction from at least one of horizontal both ends thereof, and a height limit portion configured to close a portion of the opening of the accommodation portion in a vertical direction.

2. The coating apparatus according to claim 1,
wherein the plate shim is configured to be replaceable.

3. The coating apparatus according to claim 1,
wherein the width limit portion is provided at each of horizontal both ends of the accommodation portion, and
wherein the height limit portion is provided between the two width limit portions.

4. The coating apparatus according to claim 3,
wherein the height limit portion comprises a straight portion whose edge shape changes linearly along the horizontal direction and a curved portion whose edge shape changes in a curve having a predetermined radius of curvature along the horizontal direction.

5. The coating apparatus according to claim 4,
wherein a vertical length of the straight portion becomes a maximum at a boundary between the straight portion and the curved portion, and gradually decreases as it is further away from the curved portion in the horizontal direction.

6. The coating apparatus according to claim 4,
wherein the straight portion is provided at each of horizontal both ends of the height limit portion, and
wherein the curved portion is provided between the two straight portions.

7. The coating apparatus according to claim 6,
wherein the height limit portion has a shape that is approximately symmetrical with respect to a horizontal center line of the curved portion in the horizontal direction.

8. The coating apparatus according to claim 7,
wherein an edge of the width limit portion is configured to be approximately parallel to the vertical direction, and
wherein a slope of the straight portion has an angle of approximately 60 degrees to 85 degrees with respect to the edge of the width limit portion.

9. The coating apparatus according to claim 7,
wherein a vertical length of the curved portion becomes a maximum at a horizontal center of the curved portion and a minimum at boundaries with the two straight portions.

10. The coating apparatus according to claim 9,
wherein the vertical length of the curved portion gradually decreases from the horizontal center of the curved portion toward the two straight portions.

11. The coating apparatus according to claim 10,
wherein a vertical length of the opening of the accommodation portion at the horizontal center of the curved portion is approximately 50% to 55% of a vertical length thereof at the boundary between the curved portion and the straight portion.

12. The coating apparatus according to claim 7,
wherein a horizontal length of the curved portion is approximately 4.5 times to 5.5 times a horizontal length of each of the straight portions.

13. The coating apparatus according to claim 1,
wherein a width of the slot and a thickness of the plate shim are approximately identical.

14. The coating apparatus according to claim 1,
further comprising a roller configured to transport a coating body by rotation of a roller body and disposed at a predetermined distance from the slot,
wherein the slot is configured to discharge the coating liquid onto the coating body as the roller body rotates, thereby coating the coating body.

15. The coating apparatus according to claim 14,
wherein the coating body is an electrode to be used in a battery, and
wherein the coating liquid is electrode slurry for coating the electrode.
